# EUROPÄISCHE PATENTANMELDUNG

(11) **EP 3 124 444 A1**
(43) Veröffentlichungstag der Anmeldung: **01.02.2017**
(21) Anmeldenummer: 15178693.6
(22) Anmeldetag: 28.07.2015
(51) Int. Cl.: C03C 1/00, C03C 25/10, C03C 25/42

(54) **ENDLOSFASERFORMTEIL**

(71) Anmelder: ISOLITE GmbH, 67063 Ludwigshafen (DE)
(72) Erfinder: Knoll, Michael, 69488 Birkenau (DE); Regent, Karl-Christian, 38304 Wolfenbüttel (DE)
(74) Vertreter: Grünecker Patent- und Rechtsanwälte PartG mbB

(57) **Zusammenfassung**

Endlosfaserformteil für Schalldämpfer, umfassend eine Endlosfaser und einen Mantel aus anorganischem Bindemittel, wobei der Mantel die Endlosfaser umschließt.

## Beschreibung

### Gebiet der Erfindung

Die Erfindung betrifft ein umgeformtes, thermo-akustisch wirksames Endlosglasfaserformteil mit anorganischem Bindemittel, sowie ein Verfahren zu dessen Herstellung. Das Haupteinsatzgebiet umfasst den Schalldämpferbereich in der Automobil- und Nutzfahrzeugindustrie, jedoch auch weitere verwandte Gebiete.

### Stand der Technik

Zur Beschreibung des Standes der Technik dienen beispielhaft verschiedene Technologien zum Einfüllen von Befüllungsmaterial in Schalldämpfern im Automobilbereich.

### a) Direktbefüllung eines Schalldämpfers mit losen Endlosfasern

Bei der Direktbefüllung eines Schalldämpfers werden die losen Endlosglasfasern durch eine Düse mit Hilfe von Druckluft in den Schalldämpfer eingeblasen. Die Formgebung des Fasermaterials entsteht durch die individuelle Begrenzung des Systems, insbesondere durch seine Hohlräume. Die Direktbefüllung eines Schalldämpfers hat jedoch die folgenden Nachteile:
- Eine inhomogene Verteilung des Materials im System ist wahrscheinlich.
- Damit verbunden kann die isolierende Wirkung, insbesondere die akustische Wirkung schwankend sein.
- Es können sich sogenannte Hotspots bilden, welche unerwünscht sind.
- Ein unerwünschtes Setzverhalten des Materials innerhalb des Systems ist möglich.
- Komplexe Geometrien lassen sich nur schwer realisieren.
- Eine Kontrolle des Befüllungsgrades kann typischerweise nur über das Gewicht geschehen, während die Raumerfüllung kaum kontrollierbar ist.
- Es können abstehende Fasern entstehen, die ein Verschweißen erschweren können.

Als Hotspot soll eine Stelle an einem Bauteil verstanden werden, welche unbeabsichtigt eine höhere Temperatur aufweist als Stellen in ihrer näheren Umgebung, bedingt durch fehlendes bzw. nicht ausreichendes Isoliermaterial oder fehlende bzw. nicht ausreichen Isoliereigenschaften, jeweils im Vergleich zur näheren Umgebung.

Zur Erläuterung des Begriffs Setzverhalten ist etwa folgendes Modell geeignet: Man denke sich einen kreisrunden Hohlraum welcher homogen mit Isolationsmaterial gefüllt ist, so dass das Volumen Hohlraum dem Volumen Isolationsmaterial entspricht. Bei massivem Setzverhalten z.B. durch Vibration oder Ähnlichem verdichtet sich das Isolationsmaterial bzw. es sammelt sich lokal an, so dass dann das Volumen Hohlraum größer ist als das Volumen Isolationsmaterial. Man spricht von einem Absetzen der Isolation.

### b) Einbringen in PP oder PE-Beuteln/-Strümpfen

Beim Einbringen der Endlosfaser in den Schalldämpfer mittels Kunststoffbeuteln bzw. Kunststoffstrümpfen entsteht die Formgebung der Fasern durch die Begrenzung dieser Beutel bzw. Strümpfe. Diese werden dann in die vorgesehene Position im Schalldämpfer eingelegt oder eingedrückt. Weiter können diese auch zur Montagehilfe um ein Rohr gewickelt und in den Schalldämpfer eingeschoben werden. Hierbei können die Kunststoffbeutel oder Kunststoffstrümpfe als Verbauungshilfe verwendet werden. Das Einbringen der Endlosfasern in den Schalldämpfer mittels Kunststoffbeuteln bzw. Kunststoffstrümpfen hat jedoch die folgenden Nachteile:
- Der Schalldämpfer erhitzt sich bei Betrieb. Dadurch können erhöhte Emissionen durch Verbrennen des Kunststoffs beim Betrieb des Schalldämpfers auftreten. Derartige Schalldämpfer erhalten bei einigen Automobilherstellern häufig keine Zulassung zum Einbau in deren Fahrzeuge.
- Komplexe Geometrien sind mit diesem Verfahren typischerweise nur sehr schwierig darstellbar
- Es sind typischerweise weitere Montagehilfsmittel nötig
- Ein unerwünschtes Setzverhalten ist möglich
- Die Positionierung der Kunststoffbeutel oder -strümpfe ist schwierig.

### c) Endlosfaserformteile mit organischem Bindemittel

Bei Endlosfaserformteilen mit organischen Bindemitteln, beispielsweise Phenolharz, Epoxidharz, ungesättigtes Polyesterharz, Stärke usw., erhalten die Fasern Ihre Formgebung durch die Benetzung und Aushärtung des organischen Bindemittels. Nach der Formgebung werden die Teile in den Schalldämpfer eingelegt. Dabei hat das Verfahren die folgenden Nachteile:
- Der Schalldämpfer erhitzt sich bei Betrieb. Dadurch können erhöhte Emissionen durch Verbrennen der organischen Stoffe, zum Beispiel des Phenolharzes, beim Betrieb des Schalldämpfers auftreten. Derartige Schalldämpfer erhalten häufig keine Zulassung bei einigen Automobilherstellern.
- Es ergeben sich lange Aushärtezeiten im Herstellverfahren.
- Das organische Material ist typischerweise im gesamten Endlosformteil vorhanden.
- Es ist eventuell ein Ausblasschutz nötig.

Ein Ausblasschutz soll folgendermaßen verstanden werden: Im Schalldämpfer verlaufende Abgasrohre besitzen teilweise Perforationen, welche ein Ausblasen der eingesetzten Fasern in die Umwelt ermöglichen. Zur Vermeidung des Ausblasens werden diese perforierten Rohre mit Drahtwolle ummantelt, so dass in eine Richtung das Abgas durch diese hindurch gehen kann und in die andere Richtung die Fasern aufgehalten werden können.

### d) Mechanisch verfestigte Endlosfasermatten

Erste Möglichkeit: Die Endlosfaser wird in einem Nähverfahren an bestimmten Punkten mechanisch verfestigt und so zu einem flexiblen Endlosformteil ausgeführt.

Zweite Möglichkeit: Die texturierte Endlosfaser wird in ein zweidimensionales Gebilde eingebracht und im Anschluss mechanisch verfestigt, beispielsweise mittels sog. Vernadelung.

Unter Vernadelung wird bei der Faservliesherstellung der Verbund mittels Durchdringen von vielen kleinen Einzelnadeln mit leichten Wiederhaken verstanden.

Beide Verfahren haben jedoch die folgenden Nachteile:
- Es können abstehende Fasern an den Außenseiten auftreten, welche problematisch sein können.
- Die so verfestigten Matten sind typischerweise nicht eigenstabil.
- Es ist häufig sehr schwierig, komplexe Geometrien optimal auszufüllen

Angesichts der Probleme im Stand der Technik ist es Aufgabe der vorliegenden Erfindung, eine einfachere Möglichkeit für ein Endlosfaserformteil und für die Herstellung des Endlosfaserformteils, sowie ein Verfahren zur Herstellung eines Schalldämpfers unter Verwendung dieses Endlosfaserformteils bereitzustellen und dabei die im Stand der Technik genannten Nachteile zu reduzieren oder gar zu vermeiden.

Diese Aufgabe wird durch ein Endlosfaserformteil gemäß Anspruch 1 sowie gemäß einem Verfahren zur Herstellung eines Endlosfaserformteils gemäß Anspruch 7 sowie gemäß einem Verfahren zur Herstellung von Schalldämpfern gemäß Anspruch 12 und einem entsprechend hergestellten Schalldämpfer gemäß Anspruch 15 gelöst.

Das Problem bei gängigen anorganischen Bindemittel war bisher, dass sie entweder für den Anwendungsfall nicht einsetzbar sind, da die Bindungskräfte auf Endlosfasern nicht ausreichend sind, oder - was bei einem Sol-Gel System problematisch ist - die hohe Basizität der Systeme greift die Fasern chemisch an und kann diese zerstören. Es wurde des Öfteren versucht, Sol-Gel Systeme auf Wasserglas und Kieselsolbasis einzusetzen, was aber immer mit einer Beschädigung der Faser einher ging. Die Erfinder haben ein Sol-Gel Bindemittelsystem aufgebaut, das aufgrund seiner geringeren Basizität diesen Effekt nicht hervorruft. Es wurde eine Zusammensetzung des Bindemittels gefunden, welche einen niedrigeren pH-Wert aufweist als gängige Sol-Gel Systeme auf Kieselsol und Wasserglas-Basis und somit auch eine geringere chemische Basizität.

### Beschreibung der Erfindung

Die Erfindung stellt ein Endlosfaserformteil für Schalldämpfer bereit, umfassend eine Endlosfaser und einen Mantel aus anorganischem Bindemittel, wobei der Mantel die Endlosfaser umschließt.

Diese Erfindung bezieht sich auf ein umgeformtes, thermo-akustisch wirksames Endlosglasfaserformteil mit anorganischem Bindemittel, ohne die Fasern chemisch anzugreifen und ohne den Zusatz von organischen Hilfsstoffen wie Phenolharz, Epoxidharz, ungesättigtes Polyesterharz, PP-Beutel, PE-Beute oder PE-/PP Strümpfe, sowie ohne weitere mechanische Verfestigung, wie beispielsweise durch Vernadeln, Nähen oder sonstige textile Verfahren. Das Haupteinsatzgebiet umfasst den Schalldämpferbereich in der Automobil- und Nutzfahrzeugindustrie, jedoch auch weitere verwandte Gebiete. Dabei werden aus dem Stand der Technik bekannte positive Eigenschaften vereint und negative Eigenschaften praktisch vermieden.

Das anorganische Bindemittel auf mineralischer Basis beeinträchtigt die Fasern weder chemisch noch mechanisch und sorgt dafür, dass keine zusätzlichen Emissionen durch etwaiges Verbrennen von organischem Bindemittel oder organischen Hilfsstrukturen wie beispielsweise PP/PE-Beutel/-Strümpfe entstehen können. Somit können auch Einschränkungen aufgrund von vorhandenen Emissionsnormen vermieden werden.

Durch den Außenmantel ist das Endlosformteil eigenstabil bei gleichzeitiger Eigendämpfung durch den faserigen Kern.

Ein Filament mit praktisch nicht begrenzter Länge wird als Endlosfaser bezeichnet. Diese kann ein Bündel (Multifilament oder Multifil) aus mehreren Einzelfilamenten umfassen.

Dabei kann die Endlosfaser eine geöffnete oder eine effekttexturierte Faser sein. Dabei kann es sich um eine Glasfaser wie etwa eine E- oder ECR-Glasfaser handeln. Es ist jedoch ebenso möglich, Fasertypen wie etwa Basalt-, Keramik-, Aramid-, Silica-, Carbon-, oder Kevlarfasern zu verwenden. Ferner kann die Endlosfaser kann als Matte oder Gelege vorliegen.

Das Endlosformteil besteht typischerweise aus einer geöffneten oder effekttexturierten Endlosfaser aus E-; ECR - oder ähnlichem Glas, eingeschlossen in einem Mantel aus kolloidalem Mineral. Das bedeutet, die auf einer Nano-Technologie basierende offenporige, anorganische Außenschicht kann dem Endlosformteil seine Stabilität verleihen bei zugleich schalloffener Oberfläche. Die eingeschlossene Endlosfaser kann dabei unbehandelt im Inneren des Mantels vorliegen, und zwar in definierter Dichte. Somit kann eine einwandfreie thermische, wie auch akustische Funktionsweise gewährleistet werden.

Ein normaler Faserstrang, Roving, umfasst - nach der Herstellung aus der Glasschmelzwanne - ein Bündel oder Strang aus im Wesentlichen parallel angeordneten bzw. zusammengefassten Filamenten, sog. Endlosfasern. Die Zahl der Filamente pro Faserstrange wird typischerweise in 1000 Filamenten gleich 1 K angegeben. Durch Öffnen des Faserstrangs können Einzelfilamente sichtbar gemacht werden. Ein texturierter Glasstrang weist im Gegensatz normalen Faserstrang eine leichte Verzwirnung auf. Ein effekttexturierter Glasfaserstrang weist im Gegensatz zum texturierten Glasfaserstrang eine extreme Verwirbelung der Glasfilamente auf, ohne das der Strangverbund verloren geht. Dies hat den Effekt, dass beim Verknäulen eines solchen Stranges schon eine leichte Verbindung durch die verwirbelten Filamente entsteht.

Das anorganische Bindemittel kann ein kolloidales Mineral, insbesondere ein Sol-Gel auf Wasserglas und Kieselsolbasis umfassen.

Dabei kann die verwendete Sol-Gel Chemie auf einem Zusammenspiel von verschiedenen Wasserglastypen und verschieden Kieselsoltypen basieren. Weitere lösliche Präkursoren, d.h. Ausgangsmaterialien, für Sol-Gel-Prozesse sind beispielsweise Natriumsilikate (Wasserglas), lösliche Oxide oder Alkoxide, d.h. Alkoholate, von glasbildenden Verbindungen wie SiO₂, TiO₂, ZrO₂, sowie Hydroxide wie Borsäure, H₃BO₃, oder Natriumhydroxid, NaOH. Für reines SiO2 hingegen werden beispielsweise Kieselsäureester herangezogen. Weiter Produkte, die aus Sol-Gel Chemie hergestellt werden können sind unter anderem Aerogele, Xerogele, Pulver, Faser u.v.m. Der Begriff Sol-Gel-Prozess soll als Überbegriff für Verfahren zur Herstellung nichtmetallischer anorganischer oder hybridpolymerer Materialien aus kolloidalen Dispersionen verstanden werden.

Das Wasserglas kann ein Natrium-, und/oder Kalium- und/oder Lithiumwasserglas sein, wobei die Kieselsol-Partikelgröße zwischen 7 und 40 nm betragen kann.

Als Wasserglas kann eines oder mehrere von Natronwasserglas, Kaliwasserglas oder Lithiumwasserglas verwendet werden. Die Partikelgröße der Kieselsol-Partikel, also im Wesentlichen der Durchmesser dieser Partikel, kann zwischen 7 und 40 nm betragen. Insbesondere kann dieser Bereich noch in zwei Bereiche unterteilt werden, und zwar zum einen Partikel mit einer Größe von etwa 7 -20 nm im Durchmesser oder Partikel mit einer Größe von etwa 30- 40 nm im Durchmesser. Auch ein Gemisch von Partikeln mit Durchmessern aus dem ersten Bereich und von Partikeln mit Durchmesser aus dem zweiten Bereich ist möglich. Der Vorteil der Auswahl von Partikeln im Hinblick auf ein Gemisch mit Durchmessern aus zwei typischerweise unterschiedlichen und sich nicht überlappenden Bereichen liegt in der bimodalen Modifizierung der Kieselsole, sprich das Zusammenspiel zweier unterschiedlicher Partikelgrößen kann eine optimale Oberflächenmodifikation bewirken.

Der Wasserglasanteil am Sol-Gel kann 25-75 %, typischerweise 35 - 65 %, und insbesondere 45 - 55 % betragen. Ebenso kann der Kieselsolanteil am Sol-Gel 25-75 %, typischerweise 35-65 %, und insbesondere 45 - 55 % betragen. Ferner kann das Sol-Gel mit Wasser mit Wasser gemischt werden, es kann also ein Wasseranteil hinzugegeben werden. Dabei kann das Wasser normales Wasser und/oder destilliertes Wasser sein oder es kann ein Gemisch aus beidem sein. Die Mischung des Wasseranteils mit dem Sol-Gel kann im Mischungsverhältnis von 0-1:6, typischerweise 1:2 und insbesondere 1:1 vorliegen. Somit kann eine geeignete Verdünnung des Sol-Gels erreicht werden.

Diese Angaben für Wasserglas und Kieselsol verstehen sich als Masseprozent vom jeweiligen Rohmaterial.

Ein Problem bei gängigen anorganischen Bindemittel war bisher, dass häufig entweder für den Anwendungsfall nicht einsetzbar waren, da die Bindungskräfte auf Endlosfasern nicht ausreichend sind, oder - was bei einem Sol-Gel System problematisch ist - die hohe Basizität der Systeme birgt das Risiko, die Fasern chemisch anzugreifen und gar zu zerstören. Es wurde des Öfteren versucht, Sol-Gel Systeme auf Wasserglas und Kieselsolbasis einzusetzen, was aber immer mit einer Beschädigung der Faser einher ging. Die Erfinder haben ein Sol-Gel Bindemittelsystem aufgebaut, das aufgrund seiner geringeren Basizität diesen Effekt nicht hervorruft. Es wurde eine Zusammensetzung des Bindemittels gefunden, welche einen niedrigeren pH-Wert aufweist als gängige Sol-Gel Systeme auf Kieselsol und Wasserglas-Basis und somit auch eine geringere chemische Basizität.

Für den pH Wert des Sol-Gels kann 8 ≤ pH ≤ 9 gelten.
Mit diesem pH Wert ist die Basizität, auch Alkalität genannt, kann eine genügend geringe Basizität erreicht werden, wodurch die Faser besonders geschont werden kann.

Die Erfindung stellt ferner ein Verfahren zur Herstellung eines Endlosfaserformteils bereit, umfassend: Bereitstellen einer Endlosfaser, welche insbesondere eine vordefinierte Dichte in einem Bereitstellungsvolumen aufweist; Bereitstellen eines anorganischen Bindemittels; Aufbringen des anorganischen Bindemittels auf die Endlosfaser, so dass die Endlosfaser mantelartig umschlossen wird; Aushärten des anorganischen Bindemittels durch Zuführen von Wärme.

Das Aushärten kann bei komplexen Geometrien auch im Werkzeug erfolgen. Dabei kann das Werkzeug nach dem Aushärten abgenommen werden, um so das geformte Endlosfaserformteil freizugeben.

Dabei kann die Endlosfaser wiederum eine geöffnete oder eine effekttexturierte Faser sein. Dabei kann es sich um eine Glasfaser wie etwa eine E- oder ECR-Glasfaser handeln.. Es ist jedoch ebenso möglich, Fasertypen wie etwa Basalt-, Keramik-, Aramid-, Silica-, Carbon-, oder Kevlarfasern zu verwenden. Ferner kann die Endlosfaser kann als Matte oder Gelege vorliegen.

Das Verfahren kann ferner das Formen des Endlosfaserformteils entsprechend einer vordefinierten Form mittels Zuschneiden durch ein Werkzeug mit abtrennenden Kanten, wobei typischerweise das Werkzeug durch das Zuführen der Wärme erwärmt ist.

Hierbei soll sich vordefinierte Form auf die Formgebung des Endlosfaserformteils beziehen. Als ein Werkzeug kann dazu eine Form im Sinne einer formgebenden Hülle verwendet werden. Das Werkzeug kann beispielsweise eine erhitzte Form sein, welche aus zwei Hälften, einem Stempel und einer Matrize besteht. Somit können die Ränder der Fasern abtrennt werden und gleichzeitig verschlossen werden. Mit Hilfe eines derartigen formgebenden Werkzeugs lassen sich beispielsweise für Innengeometrien sehr komplexe Bauteile realisieren.

Dabei kann das Endlosformteil durch ein erwärmtes Werkzeug mit ab-pinchenden, d.h. abtrennenden Kanten hergestellt, d.h. in die gewünschte Form gebracht werden.

Es können beim Zuschneiden definierten Kanten entstehen, somit kann eine hohe Passgenauigkeit des Formteils erreicht werden, so dass form- oder passbedingte Probleme beim Verschweißen des Schalldämpfers vermieden werden können.

Wie bereits erwähnt ist durch den Außenmantel ist das Endlosformteil eigenstabil bei gleichzeitiger Eigendämpfung durch den faserigen Kern. Somit lassen sich beispielsweise bestimmte Verformungen zum Verbau des Formteils durchführen ohne dieses zu zerstören oder zu beeinträchtigen, bei gleichzeitiger Rückkehr in den Ausgangszustand nach Verbau. Diese Eigenschaft ermöglicht einen optimalen Verbau.

Beispielsweise kann das Endlosfaserformteil in geometrischen Formen, insbesondere kugelförmig oder elliptisch, geformt werden.

Dabei sind kugelartige Formen noch relativ einfache Geometrien. Es lassen sich beispielsweise aber auch sehr komplexe dreidimensionale Geometrien herstellen. Vorzugsweise sollte das resultierende Endlosformteil keinen Hinterschnitt aufweisen. Anderenfalls müsste es beispielsweise in genügend viele Teile aufgeteilt werden, bis kein Hinterschnitt mehr vorhanden ist.

In dem Verfahren kann das Aushärten durch das Zuführen der Wärme bei einer Temperatur von wenigstens 100 °C geschehen, vorzugsweise zwischen 250°C und 400°C.

Es sind typischerweise bis maximal 750 °C für die Temperatur für den Aushärtevorgang möglich, wobei es auf die thermische Belastungsgrenze der Endlosfaser ankommen kann. Typischerweise liegen die Temperaturen fürs Aushärten zwischen 250°C und 400°C.

In dem Verfahren kann das anorganische Bindemittel ein kolloidales Mineral, insbesondere ein Sol-Gel auf Wasserglas und Kieselsolbasis sein.

Dabei kann das Sol-Gel insbesondere auf Wasserglas- und Kieselsolbasis basieren, siehe oben.

Durch das äußerlich aufgetragene mineralische Bindemittel wird typischerweise keine wesentliche Aushärtezeit beansprucht da dies nur in einer feinen kolloidalen Dispersion auf die Außenseite des Faserkörpers aufgetragen wird. Somit kann das Endlosfaserformteil rasch hergestellt werden.

In dem Verfahren kann der Wasserglasanteil am Sol-Gel 25-75 %, typischerweise 35 - 65 %, und insbesondere 45 - 55 % betragen. Ebenso kann der Kieselsolanteil am Sol-Gel 25-75 %, typischerweise 35 - 65 %, und insbesondere 45 - 55 % betragen. Ferner kann das Sol-Gel mit Wasser gemischt werden, es kann also ein Wasseranteil hinzugegeben werden. Dabei kann das Wasser normales Wasser und/oder destilliertes Wasser sein oder es kann ein Gemisch aus beidem sein. Die Mischung des Wasseranteils mit dem Sol-Gel kann im Mischungsverhältnis von 0-1:6, typischerweise 1:2 und insbesondere 1:1 vorliegen.

In dem Verfahren kann der pH Wert des Sol-Gels typischerweise im Bereich von 8-9 liegt.

Die Erfindung stellt außerdem ein Verfahren zur Herstellung von Schalldämpfern bereit, das Verfahren umfassend: Bereitstellen einer ersten Mantelschale; Bereitstellen einer zweiten Mantelschale beziehungsweise eines direkt heißgasführenden Bauteils; Bereitstellen eines Endlosfaserformteils wie oben beschrieben; Einbringen des Endlosfaserformteils zwischen die erste und zweite Mantelschale beziehungsweise zwischen die erste Mantelschale und das direkt heißgasführenden Bauteil.

Das Endlosfaserformteil oder Endlosfaserformteile können bei der Herstellung von Schalldämpfer verwendet werden. Dabei kann es sich um Hochtemperatur-Schalldämpfer handeln. Ein Zwischenraum soll hier einen Raum bezeichnen, der beispielsweise zwischen den Mantelschalen oder zwischen der ersten Mantelschale und dem heißgasführenden Bauteil vorsehen ist. In diesem Zwischenraum kann das Endlosfaserformteil eingebracht werden. Dabei kann entweder ein oder wenige vorab erstellte, entsprechend geformte Endlosfaserformteile eingebracht werden oder, bei taschenartiger Ausbildung, kann der Zwischenraum durch eine Vielzahl von Endlosfaserformteilen, beispielsweise kugelförmige Endlosfaserformteile, aufgefüllt werden.

Aufgrund des Herstellungsprozesses können sehr komplexe Geometrien mit definierter Dichte hergestellt werden. Dies verhindert die Entstehung von Hotspots, ungewolltem Setzverhalten und inhomogener Verteilung. Dadurch ergibt sich eine konstant hervorragende akustische Absorption, sowie thermisches Dämmverhalten. Es kann jeder gängige Befüllungsgrad mit engen Toleranzen umgesetzt werden.

In dem Verfahren kann das Einbringen des Endlosfaserformteils ein Einlegen und/oder ein Einschütten und/oder ein Einblasen und/oder ein Einschieben zwischen die erste und zweite Mantelschale beziehungsweise zwischen die erste Mantelschale und das direkt heißgasführenden Bauteil umfassen.

Somit kann das Endlosfaserformteil auf besonders einfache Weise in den Schalldämpfer eingebracht werden. Insbesondere ist keinerlei Umwickeln von Elementen notwendig.

Die Erfindung stellt ferner einen Schalldämpfer bereit, welcher nach dem beschriebenen Verfahren hergestellt ist.

Im Folgenden werden Ausführungsformen der Erfindung unter Bezugnahme auf die Zeichnungen beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

### Kurzbeschreibung der Figuren

Fig. 1 Verschiedene Arten von Fasersträngen
Fig. 2 Schematische Teilansicht eines Formteils im Endschalldämpfer.
Fig. 3 Schematische Teilansicht des Formteils im Endschalldämpfer.
Fig. 4 Schematische Ansicht eines dreidimensional geformten Formteils.

### Detaillierte Beschreibung

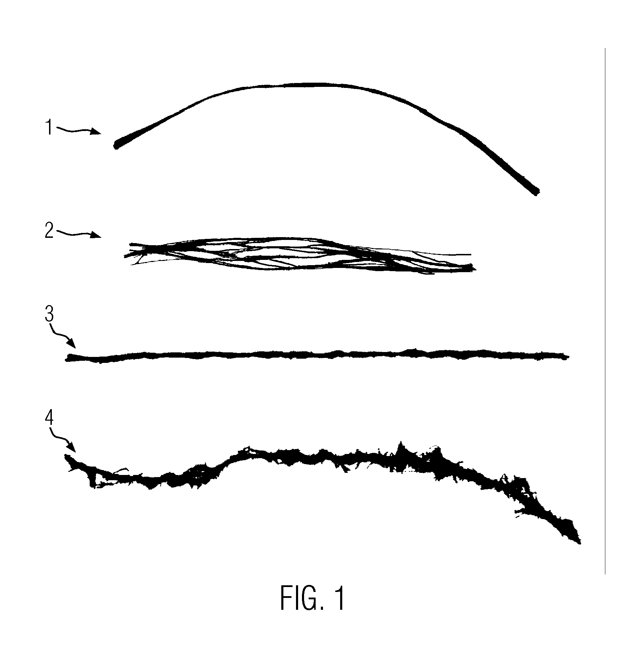

Fig. 1 zeigt verschiedene Arten von Fasersträngen. Die Unterscheidung von oben nach unten ist dabei wie folgt:
∘ Normaler Faserstrang 1, auch Roving genannt, nach der Herstellung aus der Glasschmelzwanne.
∘ Geöffneter Faserstrang 2, mittels eines geeigneten Verfahrens kann der Faserstrang 1 geöffnet werden, so dass einzelne Glasfilamente sichtbar werden. Dabei vergrößert sich das Volumen des Stranges, so dass der Faserstrang 2 erhalten wird.
∘ Texturierter Glasstrang 3: Diese Art von Glasstrang weist keine Gleichmäßigkeit wie beim normalen ungeöffneten Faserstrang auf, sondern vielmehr eine leichte Verzwirnung.
∘ Effekttexturierter Glasfaserstrang 4: Diese Art von Glasstrang weist eine extreme Verwirbelung der Glasfilamente auf, wobei trotzdem noch der Strangverbund erhalten bleibt. Somit ergibt sich der Effekt, dass beim Verknäulen eines solchen Stranges schon eine leichte Verbindung durch die verwirbelten Filamente entsteht.

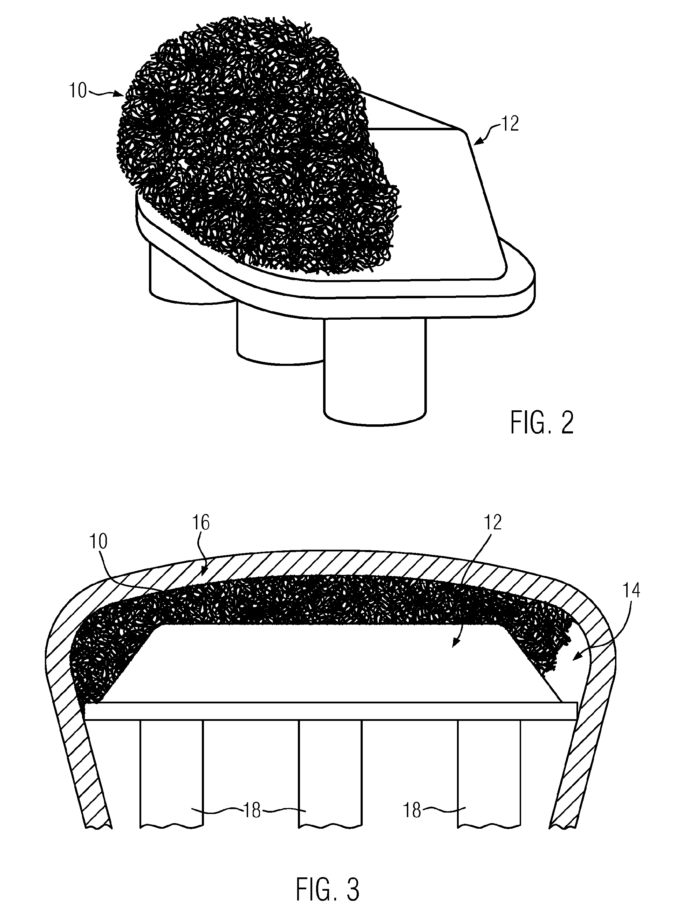

Fig. 2 zeigt eine schematische Teilansicht eines Formteils 10 auf einem Teil 12 eines zu isolierenden Systems, beispielsweise einem Endschalldämpfer. Das Endlosformteil 10 ist hier entsprechend der Form des zu dämmenden Systems geformt, wobei in dieser Ansicht nur ein Teil des Formteils 10 gezeigt ist.

Fig. 3 zeigt eine weitere schematische Teilansicht, bei der das Endlosformteil 10 einen Hohlraum 14 eine Schalldämpfersystems teilweise ausfüllt. Der Hohlraum14 ist in diesem Beispiel zwischen zu dämmendem System 12 und einer äußeren Wandung 16 gezeigt. In der vorliegenden Ansicht ist der Hohlraum nicht vollständig durch das Endlosformteil 10 ausgefüllt. Es versteht sich, dass es anwendungsbedingt auch eine andere Befüllung des Hohlraums 14 geben kann. Mit dem Bezugszeichen 18 sind Zu- und Ableitungsrohre für Abgas bezeichnet.

Das Endlosformteil 10 ist ein Endlosformteil entsprechend der vorliegenden Erfindung. Dabei ist eine Endlosfaser, beispielsweise eine effekt-texturierte Endlosfaser wie sie in Fig. 1 skizziert ist, mit einem anorganische Bindemittel als Schutzmantel versehen, welcher die Faser umschließt und im ausgehärteten Zustand formgebend ist und schützt. Dabei kann der Mantel kann ein kolloidales Mineral, insbesondere ein Sol-Gel auf Wasserglas und Kieselsolbasis umfassen. Die dabei verwendete Sol-Gel Chemie kann auf einem Zusammenspiel von verschiedenen Wasserglastypen und verschieden Kieselsoltypen basieren. Lösliche Präkursoren, d.h. Ausgangsmaterialien, für Sol-Gel-Prozesse sind beispielsweise Natriumsilikate (Wasserglas), lösliche Oxide oder Alkoxide, d.h. Alkoholate, von glasbildenden Verbindungen wie SiO₂, TiO₂, ZrO₂, sowie Hydroxide wie Borsäure, H₃BO₃, oder Natriumhydroxid, NaOH. Für reines SiO2 hingegen werden beispielsweise Kieselsäureester herangezogen. Weiter Produkte, die aus Sol-Gel Chemie hergestellt werden können sind unter anderem Aerogele, Xerogele, Pulver, Faser u.v.m. Der Begriff Sol-Gel-Prozess soll als Überbegriff für Verfahren zur Herstellung nichtmetallischer anorganischer oder hybridpolymerer Materialien aus kolloidalen Dispersionen verstanden werden. Das in diesem Beispiel vorliegende Wasserglas kann ein Natrium-, und/oder Kalium- und/oder Lithiumwasserglas sein, wobei die Kieselsol-Partikelgröße zwischen 7 und 40 nm betragen kann. Die Partikelgröße der Kieselsol-Partikel, also im Wesentlichen der Durchmesser dieser Partikel, kann insbesondere in zwei Bereiche unterteilt werden, und zwar zum einen Partikel mit einer Größe von etwa 7 -20 nm im Durchmesser oder Partikel mit einer Größe von etwa 30- 40 nm im Durchmesser. Auch ein Gemisch von Partikeln mit Durchmessern aus dem ersten Bereich und von Partikeln mit Durchmesser aus dem zweiten Bereich ist möglich. Der Wasserglasanteil am Sol-Gel kann 25-75 %, typischerweise 35 - 65 %, und insbesondere 45 - 55 % betragen, und der Kieselsolanteil kann am Sol-Gel 25-75 %, typischerweise 35 - 65 %, und insbesondere 35 - 55 % betragen. Dabei kann das Sol-Gel mit Wasser gemischt werden, es kann also ein Wasseranteil hinzugegeben werden. Dabei kann das Wasser normales Wasser und/oder destilliertes Wasser sein oder es kann ein Gemisch aus beidem sein. Die Mischung des Wasseranteils mit dem Sol-Gel kann im Mischungsverhältnis von 0-1:6, typischerweise 1:2 und insbesondere 1:1 vorliegen. Wobei diese Angaben sich für Wasserglas und Kieselsol als Masseprozent vom jeweiligen Rohmaterial verstehen.

Ein Problem bei gängigen anorganischen Bindemittel war bisher, dass häufig entweder für den Anwendungsfall nicht einsetzbar waren, da die Bindungskräfte auf Endlosfasern nicht ausreichend sind, oder - was bei einem Sol-Gel System problematisch ist - die hohe Basizität der Systeme birgt das Risiko, die Fasern chemisch anzugreifen und gar zu zerstören. Es wurde des Öfteren versucht, Sol-Gel Systeme auf Wasserglas und Kieselsolbasis einzusetzen, was aber immer mit einer Beschädigung der Faser einher ging. Die Erfinder haben ein Sol-Gel Bindemittelsystem aufgebaut, das aufgrund seiner geringeren Basizität diesen Effekt nicht hervorruft. Es wurde eine Zusammensetzung des Bindemittels gefunden, welche einen niedrigeren pH-Wert aufweist als gängige Sol-Gel Systeme auf Kieselsol- und Wasserglas-Basis und somit auch eine geringere chemische Basizität. Insbesondere kann für den pH Wert des Sol-Gels 8 ≤ pH ≤ 9 gelten. Mit diesem pH Wert ist die Basizität, auch Alkalität genannt, kann eine genügend geringe Basizität erreicht werden, wodurch die Faser besonders geschont werden kann.

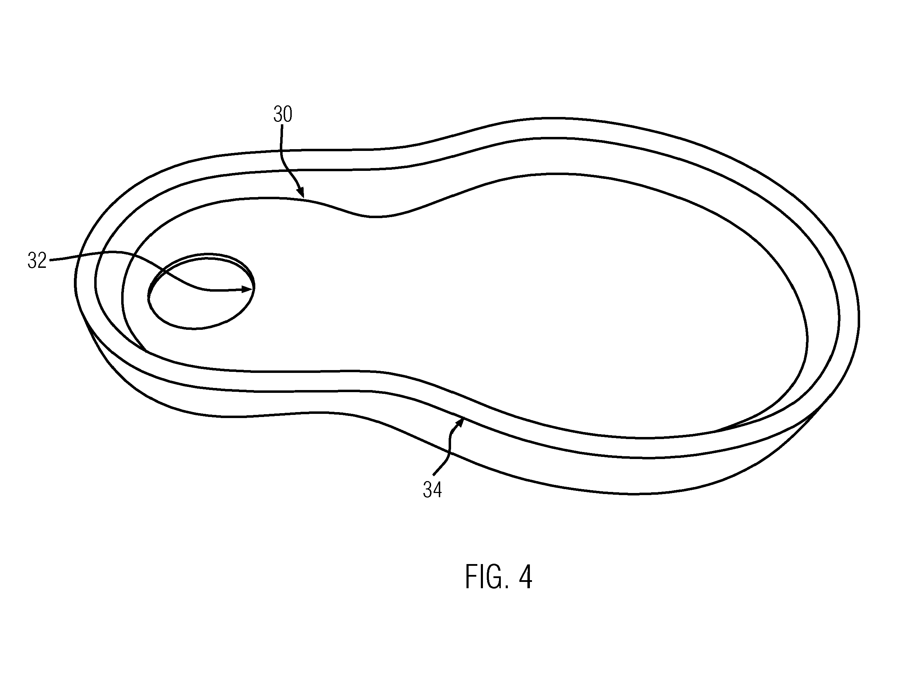

Rein zeichnungsbedingt zeigen die Fig. 1 - 3 das Material der Endlosfaserformteile in schwarz, obgleich es sich typischerweise um ein helles, weißliches Material handelt. In der folgenden Fig. 4 wird nur auf die erreichte Form abgehoben, ohne das Material schwarz zu zeichnen.

Die Fig. 4 zeigt eine schematische Ansicht eines dreidimensional geformten Endlosfaserformteils 30. In diesem Beispiel ist eine komplexere Form eines Endlosfaserformteils gezeigt, wobei das Endlosfaserformteil sowohl eine Rand 34 als auch eine Öffnung 32 aufweist. Die Form des Endlosfaserformteils 30 ist anwendungsbezogen umgesetzt. Die gezeigte Form ist eigenstabil und kann in ein zu dämmendes System als Ganzes eingesetzt werden. Dadurch ist das Endlosfaserformteil 30 in einfacher Weise einsetzbar und ggf. auch austauschbar in einem zu dämmenden System.

## Patentansprüche

1. Endlosfaserformteil (10, 30) für Schalldämpfer, umfassend:
eine Endlosfaser;
einen Mantel aus anorganischem Bindemittel, der die Endlosfaser umschließt.

2. Endlosfaserformteil (10, 30) gemäß Anspruch 1, wobei die Endlosfaser eine geöffnete oder eine effekttexturierte Glasfaser ist; wobei die Glasfaser eine E- oder ECR-Glasfaser ist; wobei die Endlosfaser als Matte oder Gelege vorliegt.

3. Endlosfaserformteil (10, 30) gemäß Anspruch 1, wobei das anorganische Bindemittel ein kolloidales Mineral, insbesondere ein Sol-Gel auf Wasserglas- und Kieselsolbasis umfasst.

4. Endlosfaserformteil (10, 30) gemäß Anspruch 3, wobei das Wasserglas ein Natrium-, und/oder Kalium- und/oder Lithiumwasserglas ist und wobei die Kieselsol-Partikelgröße zwischen 7 und 40 nm beträgt.

5. Endlosfaserformteil (10, 30) gemäß Anspruch 3 oder 4, wobei der Wasserglasanteil am Sol-Gel 25-75 %, typischerweise 35 - 65 %, und insbesondere 45 - 55 % beträgt, und der Kieselsolanteil am Sol-Gel 25-75 %, typischerweise 35 - 65 %, und insbesondere 45 - 55 % beträgt; wobei das Sol-Gel mit einem Wasseranteil gemischt ist, welcher normales Wasser und/oder destilliertes Wasser oder Gemisch aus beiden umfasst, wobei die Mischung des Wasseranteils mit dem Sol-Gel im Mischungsverhältnis von 0-1:6, typischerweise 1:2 und insbesondere 1:1 vorliegt.

6. Endlosfaserformteil (10, 30) gemäß einem der Ansprüche 3 - 5, wobei für den pH Wert des Sol-Gels 8 ≤ pH ≤ 9 gilt.

7. Verfahren zur Herstellung eines Endlosfaserformteils (10, 30), umfassend
Bereitstellen einer Endlosfaser, welche insbesondere eine vordefinierte Dichte in einem Bereitstellungsvolumen aufweist;
Bereitstellen eines anorganischen Bindemittels;
Aufbringen des anorganischen Bindemittels auf die Endlosfaser, so dass die Endlosfaser mantelartig umschlossen wird;
Aushärten des anorganischen Bindemittels durch Zuführen von Wärme.

8. Verfahren gemäß Anspruch 7, ferner umfassend: Formen des Endlosfaserformteils (10, 30) entsprechend einer vordefinierten Form mittels Zuschneiden durch ein Werkzeug mit abtrennenden Kanten, wobei typischerweise das Werkzeug durch das Zuführen der Wärme erwärmt ist.

9. Verfahren gemäß Anspruch 7 oder 8, wobei das Aushärten durch das Zuführen der Wärme bei einer Temperatur von wenigstens 100 °C, vorzugsweise zwischen 250°C und 400°C, geschieht.

10. Verfahren gemäß wenigstens einem der Ansprüche 7 - 9, wobei das anorganische Bindemittel ein kolloidales Mineral, insbesondere ein Sol-Gel auf Wasserglas und Kieselsolbasis ist.

11. Verfahren gemäß Anspruch 10, wobei der Wasserglasanteil am Sol-Gel 25-75 %, typischerweise 35 - 65 %, und insbesondere 45 - 55 % beträgt, und der Kieselsolanteil am Sol-Gel 25-75 %, typischerweise 35 - 65 %, und insbesondere 45 - 55 % beträgt; wobei das Sol-Gel mit einem Wasseranteil gemischt ist, welcher normales Wasser und/oder destilliertes Wasser oder Gemisch aus beiden umfasst, wobei die Mischung des Wasseranteils mit dem Sol-Gel im Mischungsverhältnis von 0-1:6, typischerweise 1:2 und insbesondere 1:1 vorliegt.

12. Verfahren gemäß Anspruch 10 - 11, wobei für den pH Wert des Sol-Gels 8 ≤ pH ≤ 9 gilt.

13. Verfahren zur Herstellung von Schalldämpfern, umfassend:
Bereitstellen einer ersten Mantelschale;
Bereitstellen einer zweiten Mantelschale beziehungsweise eines direkt heißgasführenden Bauteils;
Bereitstellen eines Endlosfaserformteils (10, 30) gemäß Anspruch 7;
Einbringen des Endlosfaserformteils (10, 30) zwischen die erste und zweite Mantelschale beziehungsweise zwischen die erste Mantelschale und das direkt heißgasführenden Bauteil.

14. Verfahren gemäß Anspruch 13, wobei das Einbringen des Endlosfaserformteils (10, 30) ein Einlegen und/oder ein Einschütten und/oder ein Einblasen und/oder ein Einschieben zwischen die erste und zweite Mantelschale beziehungsweise zwischen die erste Mantelschale und das direkt heißgasführenden Bauteil umfasst.

15. Schalldämpfer hergestellt nach dem Verfahren gemäß Anspruch 13 oder 14.
